(19) Europäisches Patentamt
European Patent Office
Office européen des brevets

(11) **EP 0 906 922 B1**

(12) **FASCICULE DE BREVET EUROPEEN**

(45) Date de publication et mention
de la délivrance du brevet:
**08.01.2003   Bulletin 2003/02**

(51) Int Cl.⁷: **C08F 10/02**, C08F 297/08,
C08F 4/655, C08F 4/22,
C08F 4/69

(21) Numéro de dépôt: **98124380.1**

(22) Date de dépôt: **16.04.1996**

(54) **Procédé de polymérisation d'oléfines**

Verfahren zur Olefinpolymerisation

Process for the polymerization of olefins

(84) Etats contractants désignés:
**AT BE DE ES FI FR GB IT NL PT SE**

(30) Priorité:  **28.04.1995  BE 9500397**

(43) Date de publication de la demande:
**07.04.1999   Bulletin 1999/14**

(62) Numéro(s) de document de la (des) demande(s)
initiale(s) en application de l'article 76 CBE:
**96201016.1 / 0 739 909**

(73) Titulaire: **SOLVAY POLYOLEFINS EUROPE -
BELGIUM (Société Anonyme)
1050 Bruxelles (BE)**

(72) Inventeurs:
• **Breulet, Jacques
  1970 Wezembeek-Oppem (BE)**
• **Koch, Benoît
  4280 Hannut (BE)**
• **Promel, Michel
  1120 Bruxelles (BE)**
• **Bian, Jiang
  1200 Bruxelles (BE)**
• **Lhost, Olivier
  7020 Maisieres (BE)**

(74) Mandataire: **Smith, Julian Philip Howard et al
BP International Limited,
Group Patents & Agreements,
Chertsey Road
Sunbury-on-Thames, Middlesex TW16 7LN (GB)**

(56) Documents cités:
EP-A- 0 175 532        EP-A- 0 273 284
EP-A- 0 570 051        EP-A- 0 589 472
WO-A-93/09149          WO-A-94/26790
US-A- 3 082 195

EP 0 906 922 B1

**Description**

La présente invention concerne un procédé de polymérisation d'oléfines qui permet notamment de fabriquer des polymères d'éthylène présentant une combinaison avantageuse de caractéristiques qui les rend particulièrement adaptés à la mise en oeuvre par extrusion et par extrusion soufflage en vue de la fabrication d'articles (par exemple de tuyaux) présentant d'excellentes propriétés mécaniques et notamment une résistance élevée à la fissuration sous contrainte.

Il est généralement connu que des résines présentant une viscosité élongationnelle élevée (ce qui se traduit par un taux de gonflement élevé) se prêtent particulièrement bien à la mise en oeuvre par extrusion et par extrusion soufflage. Par exemple, le brevet belge BE 840378 (SOLVAY & CIE) décrit des polyéthylènes obtenus par polymérisation dans un seul réacteur en présence d'un solide catalytique qui est préparé en faisant réagir un composé oxygéné organique de magnésium avec un composé oxygéné organique de titane et un composé oxygéné organique de zirconium, et en traitant ensuite le produit de réaction ainsi obtenu avec un halogénure d'aluminium. Les polyéthylènes connus présentent un taux de gonflement élevé. Toutefois, leurs propriétés mécaniques sont telles que la résistance à la fissuration sous contrainte des tuyaux extrudés à partir de ces polyéthylènes est faible.

Par ailleurs, des polyéthylènes de propriétés mécaniques améliorées et en particulier de résistance élevée à la fissuration sous contrainte, sont connus. Par exemple, la demande de brevet EP 603935 (SOLVAY) divulgue des polymères d'éthylène obtenus par polymérisation dans au moins deux réacteurs en série en présence d'un catalyseur au titane. Les polymères d'éthylène ainsi obtenus présentent de bonnes propriétés mécaniques (résistance élevée à la fissuration sous contrainte). Cependant, les polymères d'éthylène présentent un faible taux de gonflement.

La présente invention vise à remédier aux inconvénients précités en fournissant un polymère d'éthylène nouveau présentant à la fois un taux de gonflement élevé et une résistance élevée à la fissuration sous contrainte, qui convient particulièrement bien à la mise en oeuvre par extrusion et par extrusion soufflage.

En conséquence, l'invention concerne un polymère d'éthylène présentant un taux de gonflement ($T_G$) d'au moins 1,4, une résistance à la fissuration sous contrainte (ESCR) d'au moins 55 h et un indice de fluidité ($MI_5$) d'au moins 0,2 g/10 min.

Une des caractéristiques essentielles du polymère d'éthylène selon l'invention réside donc dans la combinaison d'un taux de gonflement élevé avec une résistance élevée à la fissuration sous contrainte.

Le taux de gonflement du polymère d'éthylène selon l'invention est mesuré en extrudant, à 190°C et à un gradient de vitesse de 100 s$^{-1}$, le polymère d'éthylène au travers d'une filière d'une longueur de 30 mm et d'un diamètre de 2 mm et à une vitesse d'extrusion constante, et en mesurant le déplacement du piston nécessaire pour extruder une longueur de jonc de 70 mm. Le taux de gonflement est défini par la relation $T_G = 0,5707 \sqrt{e}$, dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D1238 (1986).

La résistance à la fissuration sous contrainte du polymère d'éthylène est mesurée selon le mode opératoire suivant. Dix plaques de dimensions 125 mm x 12,7 mm x 3,2 mm sont pressées à partir d'une feuille en polymère d'éthylène. Deux entailles y sont apportées, la première à 60 mm d'un bout de la plaque et la deuxième à 15 mm de l'autre bout de la plaque. Les plaques entaillées sont soumises à une force de flexion constante de 7,36 N, correspondant à une contrainte inférieure à la contrainte au seuil d'écoulement plastique, et immergées simultanément dans une solution tensioactive comprenant 3 ml de nonylphénoxy-poly(éthylèneoxy)éthanol par litre d'eau à la température de 60°C. Le temps à l'issue duquel les éprouvettes se rompent est relevé et le temps moyen correspondant à la rupture de 50 % des éprouvettes est calculé.

Aux fins de la présente invention, on entend désigner par "polymères d'éthylène" les homopolymères d'éthylène ainsi que les copolymères d'éthylène avec au moins un comonomère. Les copolymères d'éthylène sont les plus avantageux. On peut citer à titre de comonomère, les alpha-oléfines contenant de 3 à 8 atomes de carbone. Le butène, l'hexène et leurs mélanges sont préférés. La teneur en comonomère dans le polymère d'éthylène est généralement d'au moins 0,1 % en poids, en particulier d'au moins 0,5 % en poids, les valeurs d'au moins 1 % en poids étant favorables. La teneur en comonomère est habituellement d'au plus 10 % en poids, plus précisément d'au plus 8 % en poids, les valeurs d'au plus 5 % en poids étant les plus courantes.

Les polymères d'éthylène selon l'invention présentent habituellement un indice de fluidité mesuré à 190°C sous une charge de 5 kg selon la norme ASTM D 1238 - Condition P (1986) (appelé ci-après $MI_5$) d'au moins 0,3 g/10 min, en particulier d'au moins 0,6 g/10 min. Le $MI_5$ ne dépasse pas en général, 10 g/10 min, le plus souvent pas 5 g/10 min, et plus spécialement pas 2 g/10 min.

Des polymères d'éthylène selon l'invention qui sont préférés sont en outre caractérisés par une viscosité dynamique η exprimée en dPa.s et mesurée à un gradient de vitesse de 100 s$^{-1}$ à 190°C telle que le rapport

$$\frac{\log (177470/MI_5) - \log \eta}{2 - \log (2,53 \times MI_5)}$$

soit d'au moins 0,55. De préférence, ce rapport est d'au moins 0,59, les valeurs d'au moins 0,61 étant particulièrement avantageuses. Dans la plupart des cas, ce rapport est d'au plus 0,73, et le plus souvent d'au plus 0,70.

Les polymères d'éthylène selon l'invention présentent couramment une masse volumique standard (ou densité) mesuré selon la norme ISO 1183 (1987) d'au moins 945 kg/m$^3$, en particulier d'au moins 950 kg/m$^3$, les valeurs d'au moins 952 kg/m$^3$ étant préférées. La masse volumique standard ne dépasse pas, en général, 965 kg/m$^3$, plus précisément pas 960 kg/m$^3$, les valeurs d'au plus 958 kg/m$^3$ étant les plus préférées.

L'invention porte également sur un procédé de polymérisation d'oléfines, selon lequel on polymérise l'oléfine éventuellement avec un ou plusieurs comonomères dans deux réacteurs disposés en série, en présence d'un solide catalytique comprenant du chrome sur un support choisi parmi les supports binaires SiO$_2$-AlPO$_4$, Al$_2$O$_3$-AlPO$_4$ et les supports ternaires SiO$_2$-Al$_2$O$_3$-AlPO$_4$, et d'un cocatalyseur, le premier réacteur étant alimenté en éthylène et éventuellement en comonomère et/ou en hydrogène, en solide catalytique, le milieu réactionnel du premier réacteur étant transféré dans le deuxième réacteur, le deuxième réacteur étant en outre alimenté en éthylène et éventuellement en comonomère et/ou en hydrogène, et le cocatalyseur étant présent dans au moins un des deux réacteurs.

Le cocatalyseur est avantageusement mis en oeuvre uniquement dans le deuxième réacteur.

Le solide catalytique utilisé dans le procédé selon l'invention peut être obtenu de manière connue en soi par imprégnation de la poudre de support avec une solution aqueuse ou organique d'un composé du chrome, suivie d'un séchage en atmosphère oxydante. On peut utiliser à cet effet un composé du chrome choisi parmi les sels solubles tels que les oxydes, l'acétate, le chlorure, le sulfate, le chromate et le bichromate en solution aqueuse, ou tel que l'acétylacétonate en solution organique. Après l'imprégnation du support avec le composé du chrome, le support imprégné est habituellement activé en le chauffant à une température de 400 à 1000 °C pour transformer une partie au moins du chrome en chrome hexavalent. Le solide catalytique selon l'invention peut également être obtenu au moyen d'un mélange mécanique de la poudre du support avec un composé solide du chrome, par exemple de l'acétylacétonate de chrome. Ensuite, ce mélange peut être préactivé à une température inférieure à la température de fusion du composé du chrome avant de l'activer conventionnellement comme décrit ci-dessus. Dans le solide catalytique, le chrome est généralement présent en proportion variant de 0,05 à 10 % en poids, de préférence de 0,1 à 5 % en poids, plus particulièrement de 0,25 à 2 % en poids de chrome sur base du poids total du solide catalytique.

Le cocatalyseur qui est utilisé dans au moins un réacteur dans le procédé selon l'invention, peut être choisi parmi les composés organométalliques de l'aluminium ou du bore. Les meilleurs résultats sont obtenus avec les composés organoboriques car ils permettent d'augmenter l'activité catalytique. On peut utiliser à titre de composé organoborique les trialkylbores dont les chaînes alkyles comprennent jusqu'à 20 atomes de carbone. En général, on préfère ceux dont les chaînes alkyles sont droites et comprennent jusqu'à 18 atomes de carbone, plus particulièrement de 2 à 8 atomes de carbone. Le triéthylbore est préféré. La quantité totale de cocatalyseur mise en oeuvre est en général de 0,02 à 50 mmoles par litre de solvant, de diluant ou de volume de réacteur et de préférence de 0,2 à 2,5 mmoles par 1.

Le support utilisé dans le procédé selon l'invention présente avantageusement une surface spécifique d'au moins 100 m$^2$/g, en particulier d'au moins 180 m$^2$/g, les valeurs d'au moins 220 m$^2$/g étant les plus favorables. La surface spécifique est le plus souvent d'au plus 800 m$^2$/g, plus précisément d'au plus 700 m$^2$/g, les valeurs d'au plus 650 m$^2$/g étant les plus courantes. La surface spécifique (SS) du support est mesurée selon la méthode volumétrique BET de la norme britannique BS 4359/1 (1984).

Le support présente en général une température de cristallisation d'au moins 700 °C, telle que par exemple d'au moins 1000 °C. La température de cristallisation du support est déterminée en soumettant un échantillon du support à un traitement thermique à différentes températures (500 °C, 700 °C, 800 °C, 950 °C, 1050 °C), et en examinant ensuite, après chaque traitement thermique, cet échantillon par diffraction des rayons X.

Le support présente habituellement un volume poreux d'au moins 1,5 cm$^3$/g, plus spécialement d'au moins 2 cm$^3$/g, les valeurs d'au moins 2,2 cm$^3$/g étant recommandées. Le volume poreux est généralement d'au plus 5 cm$^3$/g, en particulier d'au plus 4,5 cm$^3$/g, les valeurs d'au plus 4 cm$^3$/g étant courantes. Le volume poreux (VP) est la somme du volume poreux constitué de pores de rayon inférieur ou égal à 75 Å, mesuré par la méthode de pénétration à l'azote (BET) selon la technique volumétrique décrite dans la norme britannique BS 4359/1 (1984), et du volume poreux mesuré par la méthode de pénétration au mercure au moyen du porosimètre de type PORO 2000 commercialisé par CARLO ERBA CO, selon la norme belge NBN B 05-202 (1976). De bons résultats peuvent être obtenus lorsque la surface spécifique (SS) et le volume poreux (VP) du support répondent à la relation suivante :

$$SS < (VP \times 564 - 358),$$

dans laquelle SS et VP sont respectivement les valeurs numériques de la surface spécifique exprimée en m$^2$/g et du volume poreux exprimé en cm$^3$/g.

Le support, lorsqu'il ne contient que deux des constituants précités, contient avantageusement la silice et le phosphate d'aluminium dans un rapport molaire de 0,01 à 99 (de préférence de 0,05 à 20), l'alumine et le phosphate d'aluminium dans un rapport molaire de 0,01 à 99 (de préférence de 0,05 à 20). De préférence, le support contient la silice (X), l'alumine (Y) et le phosphate d'aluminium (Z) en un pourcentage molaire (X):(Y):(Z) de (10 à 95):(1 à 80):(1 à 85), et plus particulièrement de (20 à 80):(1 à 60):(5 à 60). Le support peut éventuellement contenir en outre du titane. La quantité de titane présente dans le support, exprimée en pourcentage molaire de $TiO_2$ par rapport au support du solide catalytique contenant la silice, l'alumine, le phosphate d'aluminium et le dioxyde de titane, est en général au moins égale à 0,1 % mol, de préférence à 0,5 % mol; les valeurs d'au moins 1 % mol étant les plus courantes. La quantité de titane exprimée en pourcentage molaire de $TiO_2$ ne dépasse pas le plus souvent 40 % mol, plus particulièrement pas 20 % mol, les valeurs d'au plus 15 % mol étant recommandées.

Le support se présente généralement à l'état d'une poudre dont les grains ont un diamètre de 20 à 200 μm. Il présente habituellement un poids spécifique apparent supérieur ou égal à 50 kg/m$^3$, en particulier à 100 kg/m$^3$; il est généralement au maximum égal à 500 kg/m$^3$, typiquement à 300 kg/m$^3$. Le poids spécifique apparent est mesuré par écoulement libre selon le mode opératoire suivant : dans un récipient cylindrique de 50 cm$^3$ de capacité, on verse la poudre du support à analyser en évitant de la tasser, depuis une trémie dont le bord inférieur est disposé 20 mm au-dessus du bord supérieur du récipient. On pèse ensuite le récipient rempli de la poudre et arasé à l'aide d'une latte rectiligne, on déduit la tare du poids relevé et on divise le résultat obtenu (exprimé en g) par 50.

Un procédé particulier d'obtention du support consiste à mélanger, dans une première étape, un alcool, de l'eau, un alcoolate de silicium et un acide en des quantités telles que le rapport molaire eau/silicium soit de 2 à 50, à ajouter au milieu d'hydrolyse ainsi obtenu, dans une deuxième étape, une solution acide d'un composé d'aluminium et une solution d'une source d'ions phosphates, et, dans une troisième étape, un agent de précipitation pour obtenir un précipité, à laver, dans une quatrième étape, le précipité ainsi obtenu à l'eau et ensuite au moyen d'un liquide organique, puis à le sécher, dans une cinquième étape, par distillation jusqu'à l'obtention d'une poudre, et à calciner la poudre.

L'alcoolate de silicium mis en oeuvre à la première étape du procédé particulier d'obtention du support, comprend de préférence un groupement alkoxy de 1 à 20 atomes de carbone. Les groupements alkoxy du type aliphatique sont recommandés, spécialement ceux du type aliphatique saturé, non substitué. Les alcoolates de silicium qui conviennent bien sont le tétra-éthylate, le tétra-méthylate et le tétra-isopropylate de silicium. Le tétraéthylate de silicium est préféré.

L'alcool mis en oeuvre dans la première étape du procédé particulier d'obtention du support a pour fonction de dissoudre l'alcoolate de silicium. Les alcools aliphatiques linéaires sont préférés. On peut citer comme exemple l'éthanol, l'isopropanol et le méthanol. L'éthanol est préféré. On utilise avantageusement un alcool dont le groupement hydrocarboné correspond à celui du groupement alkoxy de l'alcoolate de silicium utilisé.

La première étape est avantageusement réalisée à pH acide et comprend, d'une part, l'adjonction de l'eau, de l'acide, de l'alcoolate de silicium et de l'alcool, la température, pendant l'adjonction, étant inférieure ou égale à 30 °C (en particulier inférieure à 20 °C, typiquement environ 10 °C, les températures supérieures à 0 °C étant recommandées), et, d'autre part, un mûrissage du milieu réactionnel ainsi obtenu à une température au moins égale à 20 °C et inférieure à la température d'ébullition du milieu (par exemple de 30 à 100 °C, les températures de 40 à 80 °C étant les plus courantes et celles de 50 à 70 °C étant recommandées), de manière à substituer une partie au moins des groupements alkoxy de l'alcoolate de silicium par des groupements hydroxy, sans qu'il se produise une gélification ou une précipitation de silice. Dans la première étape, le pH du milieu réactionnel est en général inférieur à 3, de préférence de 0,5 à 2,5, par exemple environ égal à 1. L'acide mis en oeuvre à la première étape peut être de nature minérale ou organique. Il peut par exemple s'agir de l'acide chlorhydrique, nitrique, phosphorique ou sulfurique. L'acide chlorhydrique convient particulièrement bien. De préférence, le mûrissage est réalisé à une température supérieure à celle de l'addition des réactifs. Le mûrissage a pour fonction de permettre une hydrolyse et une condensation partielles de l'alcoolate de silicium.

La deuxième étape du procédé particulier d'obtention du support consiste à ajouter au milieu issu de la première étape une solution acide d'un composé d'aluminium et une solution d'une source d'ions phosphates. Le composé d'aluminium peut être choisi parmi les sels inorganiques d'aluminium et les alcoolates d'aluminium. Les alcoolates d'aluminium contenant des groupements aliphatiques linéaires saturés non substitués sont recommandés. Les groupements aliphatiques contiennent de préférence de 1 à 20 atomes de carbone. Les alcoolates d'aluminium dont le groupement alkoxy correspond à celui de l'alcoolate de silicium utilisé, conviennent particulièrement bien. Le nitrate et le chlorure d'aluminium sont particulièrement préférés. Aux fins de la présente invention, on entend désigner par source d'ions phosphates tout composé susceptible de former des ions phosphates. Spécialement recommandés sont les sels inorganiques phosphatés, les éthers-sels phosphatés et l'acide phosphorique. On utilise de préférence l'acide phosphorique. Dans la deuxième étape du procédé particulier d'obtention du support, on préfère opérer de manière très lente pour éviter que le milieu s'échauffe, par exemple à une température inférieure à 30 °C, typiquement inférieure ou égale à 20 °C, par exemple comprise entre 0 et 10°C.

La troisième étape du procédé particulier d'obtention du support consiste à former un précipité sous l'effet d'un agent de précipitation, qui peut être choisi parmi tous les composés susceptibles de provoquer une coprécipitation des réactifs mis en oeuvre à la première et la deuxième étape (l'alcoolate de silicium hydrolysé et partiellement condensé issu de la première étape et défini plus haut, le composé d'aluminium et la source d'ions phosphates) sous la forme d'un oxyde mixte de silicium, d'aluminium et de phosphore. On peut citer comme exemples d'agent de précipitation, l'oxyde d'éthylène, le carbonate d'ammonium et l'hydroxyde d'ammonium. On utilise de préférence une solution aqueuse d'hydroxyde d'ammonium. Le pH du milieu de coprécipitation est généralement supérieur ou égal à 5, typiquement supérieur ou égal à 6; il est habituellement inférieur à 11, les valeurs inférieures à 10 étant recommandées. De préférence, on maintient le pH constant à une valeur de 6 à 10, par exemple 8, pendant toute la durée de la coprécipitation.

Dans la quatrième étape du procédé particulier d'obtention du support, le lavage à l'eau consiste en général à mettre le précipité en contact avec une quantité d'eau suffisante pour éliminer les impuretés contenues dans le précipité, et ensuite à éliminer une partie au moins de cette quantité d'eau par tout moyen connu adéquat, par exemple par centrifugation ou par filtration. On opère de préférence par centrifugation. Ensuite, on soumet le précipité lavé à l'eau, à un lavage au moyen d'un liquide organique, qui a pour fonction d'éliminer l'eau qui imprègne le précipité. Le liquide organique présente préférentiellement une température de vaporisation inférieure à 120 °C, typiquement inférieure à 100 °C, par exemple de 70 à 90 °C. Des liquides organiques utilisables sont les alcools, les éthers ou leurs mélanges. Les alcools sont préférés, particulièrement ceux comprenant de 1 à 4 atomes de carbone. L'isopropanol convient bien.

Le précipité lavé est ensuite soumis, dans une cinquième étape du procédé particulier d'obtention du support, à un séchage par atomisation ou par distillation, de préférence azéotropique, afin d'évaporer l'eau et le liquide organique non éliminés précédemment, jusqu'à l'obtention d'une poudre du support.

A l'issue du séchage, on recueille une poudre du support, que l'on soumet à une calcination. La calcination a pour fonction d'extraire, à température élevée, les impuretés organiques de la poudre. Elle est généralement poursuivie jusqu'à ce que le poids de la poudre reste constant au cours du temps, tout en évitant une cristallisation de la poudre. La calcination peut être effectuée sous air (de préférence sous air sec) dans un lit fluidisé à une température inférieure à la température de cristallisation de la poudre. La température est en général de 300 à 1500 °C, typiquement de 350 à 1000 °C, de préférence de 400 à 600 °C.

Lorsque l'on utilise un support choisi parmi les supports binaires $SiO_2$-$AlPO_4$, $Al_2O_3$-$AlPO_4$ et parmi les supports ternaires $SiO_2$-$Al_2O_3$-$AlPO_4$ tels que décrits ci-dessus dans un procédé de polymérisation d'oléfines dans deux réacteurs en série, on peut également obtenir des polyoléfines autres que le polymère d'éthylène conforme à l'invention.

L'oléfine peut être choisie parmi les oléfines contenant de 2 à 20 atomes de carbone, et de préférence de 2 à 6 atomes de carbone, telles que l'éthylène, le propylène, le butène-1, le 4-méthylpentène-1 et l'hexène-1. L'éthylène, le butène-1 et l'hexène-1 conviennent bien. L'éthylène est particulièrement préféré. Le comonomère peut être choisi parmi les oléfines citées ci-dessus et parmi les dioléfines comprenant de 4 à 20 atomes de carbone. Il va de soi que le comonomère introduit au deuxième réacteur peut être différent de celui qui est introduit au premier réacteur.

Les procédés de polymérisation de l'invention peuvent être effectués selon tout procédé connu, en solution dans un solvant qui peut être l'oléfine elle-même à l'état liquide, ou en suspension dans un diluant hydrocarboné, ou encore en phase gazeuse. On obtient de bons résultats dans les polymérisations en suspension.

Le principe d'une polymérisation dans deux réacteurs disposés en série est celui décrit dans la demande de brevet EP 603935 (SOLVAY). L'installation peut évidemment comprendre plus de deux réacteurs connectés en série. Les procédés de polymérisation en deux réacteurs en série sont avantageusement réalisés de manière à utiliser dans le deuxième réacteur des conditions de polymérisation (température, concentration en agent de transfert tel que l'hydrogène, concentration en comonomère éventuel, concentration en cocatalyseur éventuel,...) différentes de celles mises en oeuvre dans le premier réacteur. Ainsi, le polymère produit dans le deuxième réacteur présente un indice de fluidité différent de celui produit dans le premier réacteur. On peut donc faire en sorte que l'indice de fluidité obtenu dans le premier réacteur soit plus faible que celui obtenu dans le deuxième réacteur. En variante, on peut obtenir un indice de fluidité plus élevé dans le premier réacteur que celui obtenu dans le deuxième réacteur.

Les exemples qui suivent sont destinés à illustrer l'invention. La signification des symboles utilisés dans ces exemples, les unités exprimant les grandeurs mentionnées et les méthodes de mesure de ces grandeurs sont explicitées ci-dessous.

$MI_2$ = indice de fluidité du polyéthylène mesuré à 190 °C sous une charge de 2,16 kg selon la norme ASTM D 1238 (condition E) (1986).

$MI_5$ = indice de fluidité du polyéthylène mesuré à 190°C sous une charge de 5 kg selon la norme ASTM D 1238 (condition P) (1986).

MVS = masse volumique standard du polyéthy-

lène exprimée en kg/m$^3$ et mesurée selon la norme ISO 1183 (1987).

η =    viscosité dynamique du polyéthylène exprimée en dPa.s et mesurée à un gradient de vitesse de 100 s$^{-1}$ à 190°C.

ESCR =    résistance à la fissuration sous contrainte exprimée en heure et mesurée par la méthode suivante : Dix plaques de dimensions 125 mm x 12,7 mm x 3,2 mm sont pressées à partir d'une feuille en polymère d'éthylène. Deux entailles y sont apportées, la première à 60 mm d'un bout de la plaque et la deuxième à 15 mm de l'autre bout de la plaque. Les plaques entaillées sont soumises à une force de flexion constante de 7,36 N, correspondant à une contrainte inférieure à la contrainte au seuil d'écoulement plastique, et immergées simultanément dans une solution tensio-active comprenant 3 ml de nonylphénoxy-poly(éthylèneoxy)éthanol par litre d'eau à la température de 60°C. Le temps à l'issue duquel les éprouvettes se rompent est relevé et le temps moyen correspondant à la rupture de 50 % des éprouvettes est calculé.

$T_G$ =    taux de gonflement du polymère d'éthylène (sans unité). La méthode de mesure consiste à extruder, à 190°C et à un gradient de vitesse de 100 s$^{-1}$, le polymère d'éthylène au travers d'une filière d'une longueur de 30 mm et d'un diamètre de 2 mm et à une vitesse d'extrusion constante, et à mesurer le déplacement du piston nécessaire pour extruder une longueur de jonc de 70 mm. Le taux de gonflement est défini par la relation $T_G = 0,5707 \sqrt{e}$, dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D 1238 (1986).

P =    productivité du solide catalytique exprimée en kg de polyéthylène produit par gramme de titane mis en oeuvre.

Exemple 1 (de référence)

Dans cet exemple on a préparé un polymère d'éthylène dans deux réacteurs en série à l'aide d'un catalyseur au titane selon le mode opératoire décrit dans la demande de brevet EP 603935 et on a mesuré son taux de gonflement et sa résistance à la fissuration sous contrainte.

A. Préparation du solide catalytique

On a fait réagir pendant 4 heures à 150°C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium en une quantité telle que le rapport molaire d'aluminium au magnésium soit égal à 6,5, pendant 90 minutes à 45°C. Le solide ainsi obtenu comprenait 15,8 % en poids de Ti, 36,0 % en poids de Cl, 2,2 % en poids d'Al et 4,4 % en poids de Mg.

B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,27 et le solide catalytique obtenu en A. La température a été maintenue constante à une valeur 85 °C. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0085 et en butène dans un rapport molaire butène/éthylène de 0,31. La température dans le deuxième réacteur était de 70°C. La productivité P était de 200. Le polymère obtenu présentait les caractéristiques suivantes :

$MI_5$ =    1,3
η=    15400
$T_G$ =    1,34
ESCR =    128
MVS =    956.

Le polymère obtenu présente un taux de gonflement inférieur à 1,4 tandis que les polymères d'éthylène selon l'invention présentent un taux de gonflement d'au moins 1,4.

Exemple 2 (de référence)

Dans cet exemple on a préparé un polymère d'éthylène dans un seul réacteur à l'aide d'un catalyseur au titane et au zirconium selon le mode opératoire décrit dans le brevet belge BE 840378 et on a mesuré son taux de gonflement et sa résistance à la fissuration sous contrainte.

A. Préparation du solide catalytique

On a fait réagir pendant 4 heures à 150°C du diéthylate de magnésium avec du tétrabutylate de titane et avec du tétrabutyalte de zirconium en des quantités telles que le rapport molaire Ti/Mg soit égal à 0,6 et que le rapport molaire Zr/Ti soit égal à 1,2. Ensuite, on a chloré et précipité le produit de réaction ainsi obtenu en mettant celui-ci en contact avec une solution de dichlorure d'isobutylaluminium en une quantité telle que le rapport molaire Al/Mg soit de 11 à 45°C. On a mélangé le solide catalytique avec du tétraisopropylate de titane à raison de 150 g par kg de solide catalytique. Le solide ainsi obtenu comprenait 6,4 % en poids de Ti, 12,6 % en poids de Zr, 55,2 % en poids de Cl, 2,5 % en poids d'Al et 5,8 % en poids de Mg.

### B. Polymérisation d'éthylène en un seul réacteur

On a polymérisé de l'éthylène dans un seul réacteur. On y a introduit de l'hexane, du trüsobutylaluminium à titre de cocatalyseur, de l'éthylène et de l'hydrogène dans un rapport molaire hydrogène/éthylène de 0,09 et le solide catalytique obtenu en A. On a introduit du butène dans un rapport molaire butène/éthylène de 0,07. La température a été maintenue constante à une valeur de 87 °C. La productivité P était de 100. Le polymère obtenu présentait les caractéristiques suivantes :

$MI_5$ =        1,1  
$\eta$ =        18300  
$T_G$ =        1,59  
ESCR =        38  
MVS =        954.

Le polymère obtenu présente une résistance à la fissuration sous contrainte inférieur à 55 h tandis que les polymères d'éthylène selon l'invention présentent une résistance à la fissuration sous contrainte d'au moins 55 h.

### Exemple 3 (de référence)

Dans cet exemple on a préparé un polymère d'éthylène dans un seul réacteur à l'aide d'un catalyseur au chrome sur un support en silice et on a mesuré son taux de gonflement et sa résistance à la fissuration sous contrainte.

### A. Préparation du solide catalytique

On a utilisé le catalyseur commercial EP30X de la société CROSFIELD comprenant 1 % en poids de Cr supporté sur de la silice. On a calciné le catalyseur dans un lit fluidisé à 760 °C pendant 12 heures sous air sec, et on a recueilli le solide catalytique.

### B. Polymérisation d'éthylène en un seul réacteur

On a polymérisé de l'éthylène dans un seul réacteur. On y a introduit de l'isobutane, de l'éthylène et de l'hexène dans un rapport molaire hexène/éthylène de 0,017 et le solide catalytique obtenu en A. La pression totale dans le réacteur et la température ont été maintenues constantes à une valeur de 4,2 MPa et 103 °C respectivement. Le polymère obtenu présentait les caractéristiques suivantes :

$MI_5$ =        0,86  
$\eta$ =        17900  
$T_G$ =        1,67  
ESCR =        24  
MVS =        954,0.

Le polymère obtenu présente une résistance à la fissuration sous contrainte inférieur à 55 h tandis que les polymères d'éthylène selon l'invention présentent une résistance à la fissuration sous contrainte d'au moins 55 h.

### Exemple 4

### A. Préparation du solide catalytique

A.1. On a ajouté à une solution de tétraéthylate de silicium et d'éthanol à une température de 10°C, une solution d'eau et d'acide chlorhydrique 1M, de manière à obtenir un pH de 1. Les quantités mises en oeuvre étaient : 34,7 g de tétraéthylate de silicium, 41,7 g d'éthanol, 18,9 g d'eau et 11,5 g d'acide chlorhydrique. Ensuite, on a soumis le milieu réactionnel ainsi obtenu à un mûrissage à 60°C pendant 2 heures.

A.2. En parallèle, on a préparé une solution aqueuse contenant 62,5 g de nitrate d'aluminium hydraté, 17,1 g d'acide phosphorique et 33,3 g d'eau. Ensuite, on a ajouté la solution ainsi obtenue au milieu réactionnel obtenu en A.1, sous agitation vigoureuse et à 10°C.

A.3. On a ajouté à 500 g d'une solution aqueuse d'hydroxyde d'ammonium de pH 8 thermnostatisée à 10°C, le mélange obtenu en A.2, en maintenant le pH constant à une valeur de 8, afin d'effectuer une gélification. On a soumis le gel à une maturation à pH 8, pendant 2 heures, sous agitation et à 60°C.

A.4. Ensuite, on a lavé le gel à l'eau et puis au moyen d'isopropanol et on a recueilli une suspension du gel.

A.5. On a séché le gel obtenu en A.4 par atomisation jusqu'à l'obtention d'une poudre.

A.6. On a calciné la poudre obtenue en A.5 dans un lit fluidisé sous balayage d'air sec, pednant 4 heures à 500°C. On a recueilli une poudre comprenant :

15,6 % en poids de Si  
15,1 % en poids d'Al  
16,3 % en poids de P

A.7 On a mélangé le support obtenu en A.6 avec de l'acétylacétonate de chrome en une quantité telle que le mélange comprenne 0,7 % en poids de chrome. Puis, on a traité le mélange ainsi obtenu dans un lit fluidisé à 150°C pendant 2 heures sous balayage d'air sec. Ensuite, on l'a calciné dans le lit fluidisé à 600°C pendant 10 heures sous air sec et on a recueilli le solide catalytique qui présentait les caractéristiques suivantes:

surface spécifique de 407 m$^2$/g
volume poreux de 2,20 cm$^3$/g
température de cristallisation supérieure à 700°C.

B. Polymérisation d'éthylène dans un seul réacteur

On a polymérisé de l'éthylène dans un seul réacteur. On y a introduit en continu de l'isobutane, de l'éthylène, de l'hydrogène dans un rapport molaire hydrogène/éthylène de 0,046 et de l'hexène dans un rapport molaire éthylène/hexène de 0,003 et le solide catalytique obtenu en A. La pression totale dans le réacteur et la température ont été maintenues constantes à une valeur de 3,8 MPa et 107 °C respectivement. Le polymère obtenu présentait les caractéristiques suivantes :

$MI_5$ =        0,58
$\eta$ =        18000
$T_G$ >       1,5
ESCR =      111
MVS =       955,8

Exemple 5 (conforme à l'invention)

Dans cet exemple on a fabriqué un polymère d'éthylène conforme à l'invention au moyen du procédé de préparation selon l'invention.

A. Préparation du solide catalytique

On a utilisé le solide catalytique de l'exemple 4 qui a été calciné dans un lit fluidisé à 815 °C pendant 16 heures sous air sec.

B. Polymérisation d'éthylène dans deux réacteurs

Le procédé de polymérisation en deux réacteurs successifs a été simulé dans un seul réacteur en deux étapes séparées par une détente intermédiaire et réinitialisation des paramètres opératoires.

Polymérisation d'un premier polymère (i) :

On introduit dans un autoclave de 3 litres, muni d'un agitateur, 108 mg de catalyseur. La température de polymérisation est amenée à 80 °C et est maintenue constante pendant la polymérisation. On y a ensuite introduit l'éthylène. La pression partielle d'éthylène est maintenue constante à une valeur de 5,8 bars. On introduit 6,7 g d'hexène puis 0,67 g chaque fois que l'on a produit 50 g de PE (pour maintenir un rapport Hexène/Ethylène constant). Le rapport Hexène/Ethylène est de 0,11. Après 68 minutes, l'autoclave a été dégazé jusqu'à une pression de 6 bars. 162 gr de polymère ont été obtenus (i).

Polymérisation d'un deuxième polymère (ii) :

On a ajouté 1 litre d'isobutane dans l'autoclave. La température a été amenée à 98 °C et on l'a maintenue constante durant le temps de la polymérisation. On a ensuite introduit une dose unique d'hydrogène pour obtenir un rapport molaire Hydrogène/Ethylène dans la phase liquide de 0,22. On a ensuite introduit le cocatalyseur (triéthylbore) dans l'autoclave dans une quantité telle que le rapport molaire triéthylbore/chrome soit de 3,8. La pression partielle d'éthylène a été maintenue constante à une valeur de 3.5 bars jusqu'à l'obtention d'une quantité supplémentaire de 162 g de polymère (ii). Après dégazage, on a recueilli de l'autoclave 324 g d'une composition des polymères (i) et (ii). Le catalyseur présentait une activité de 33000 et 93000 respectivement dans les blocs (i) et (ii). L'activité est exprimée en gPE/gcata.h.[C2H4]. Les propriétés du polymère, après granulation, sont les suivantes :

$MI_5$ =        0.49
$\eta$ =        14 000
$T_G$ =       1,9
MVS =       954,4.

**Revendications**

1. Procédé de polymérisation d'oléfines selon lequel on polymérise l'oléfine éventuellement avec un ou plusieurs comonomères dans deux réacteurs disposés en série, en présence d'un solide catalytique comprenant du chrome sur un support choisi parmi les supports binaires $SiO_2$-$AlPO_4$, $Al_2O_3$-$AlPO_4$ et les supports ternaires $SiO_2$-$Al_2O_3$-$AlPO_4$, et d'un cocatalyseur, le premier réacteur étant alimenté en éthylène et éventuellement en comonomère et/ou en hydrogène, en solide catalytique, le milieu réactionnel du premier réacteur étant transféré dans le deuxième réacteur, le deuxième réacteur étant en outre alimenté en éthylène et éventuellement en comonomère et/ou en hydrogène, et le cocatalyseur étant présent dans au moins un des deux réacteurs.

2. Procédé selon la revendication 1, **caractérisé en ce que** le cocatalyseur est mis en oeuvre uniquement dans le deuxième réacteur.

3. Procédé selon la revendication 1 ou 2, **caractérisé en ce que** le cocatalyseur est choisi parmi les composés organoboriques.

4. Procédé selon la revendication 3, **caractérisé en ce que** les composés organoboriques sont choisis parmi les trialkylbores dont les chaînes alkyles comprennent jusqu'à 20 atomes de carbones.

5. Procédé selon l'une quelconque des revendications 1 à 4, **caractérisé en ce que** le support contient la silice (X), l'alumine (Y) et le phosphate d'aluminium (Z) en un pourcentage molaire (X):(Y):(Z) de (10 à 95):(1 à 80):(1 à 85).

6. Procédé selon l'une quelconque des revendications 1 à 5, **caractérisé en ce que** le support présente un volume poreux d'au moins 1,5 cm$^3$/g.

7. Procédé selon l'une quelconque des revendications 1 à 6, **caractérisé en ce que** l'oléfine est de l'éthylène.

8. Procédé selon l'une quelconque des revendications 1 à 7, **caractérisé en ce que** le comonomère est choisi parmi les oléfines et les dioléfines comprenant de 4 à 20 atomes de carbone.

## Claims

1. Process for polymerization of olefins according to which the olefin is optionally polymerized with one or more comonomers in two reactors arranged in series, in the presence of a solid catalyst comprising chromium on a support chosen from the binary supports SiO$_2$-AlPO$_4$, Al$_2$O$_3$-AlPO$_4$ and the ternary supports SiO$_2$-Al$_2$O$_3$-AlPO$_4$, and of a cocatalyst, the first reactor being fed with ethylene and optionally with comonomer and/or with hydrogen, and with solid catalyst, the reaction medium from the first reactor being transferred to the second reactor, the second reactor also being fed with ethylene and optionally with comonomer and/or with hydrogen, and the cocatalyst being present in at least one of the two reactors.

2. Process according to Claim 1, **characterized in that** the cocatalyst is used only in the second reactor.

3. Process according to Claim 1 or 2, **characterized in that** the cocatalyst is chosen from organoboron compounds.

4. Process according to Claim 3, **characterized in that** the organoboron compounds are chosen from trialkylboranes whose alkyl chains contain up to 20 carbon atoms.

5. Process according to any one of Claims 1 to 4, **characterized in that** the support comprises silica (X), alumina (Y) and aluminium phosphate (Z) in a molar percentage (X):(Y):(Z) of (10-95) : (1-80): (1-85).

6. Process according to any one of Claims 1 to 5, **characterized in that** the support has a pore volume of at least 1.5 cm$^3$/g.

7. Process according to any one of Claims 1 to 6, **characterized in that** the olefin is ethylene.

8. Process according to any one of Claims 1 to 7, **characterized in that** the comonomer is chosen from olefins and diolefins containing from 4 to 20 carbon atoms.

## Patentansprüche

1. Verfahren zur Polymerisation von Olefinen, gemäß dem man das Olefin gegebenenfalls mit einem oder mehreren Comonomeren in zwei in Reihe angeordneten Reaktoren polymerisiert in Gegenwart eines katalytischen Feststoffs, der Chrom auf einem Träger umfasst, der ausgewählt ist unter den binären Trägern SiO$_2$-AlPO$_4$, Al$_2$O$_3$-AlPO$_4$ und den ternären Trägern SiO$_2$-Al$_2$O$_3$-AlPO$_4$, und eines Cokatalysators, wobei der erste Reaktor mit Ethylen und gegebenenfalls mit Comonomer und/oder mit Wasserstoff, mit katalytischem Feststoff gespeist wird, das Reaktionsmedium des ersten Reaktors in den zweiten Reaktor überführt wird, der zweite Reaktor außerdem mit Ethylen und gegebenenfalls mit Comonomer und/oder mit Wasserstoff gespeist wird und der Cokatalysator in wenigstens einem der beiden Reaktoren vorhanden ist.

2. Verfahren gemäß Anspruch 1, **dadurch gekennzeichnet, dass** der Cokatalysator nur in dem zweiten Reaktor eingesetzt wird.

3. Verfahren gemäß Anspruch 1 oder 2, **dadurch gekennzeichnet, dass** der Cokatalysator unter den bororganischen Verbindungen ausgewählt ist.

4. Verfahren gemäß Anspruch 3, **dadurch gekennzeichnet, dass** die bororganischen Verbindungen unter den Trialkylborverbindungen, deren Alkylketten bis zu 20 Kohlenstoffatome umfassen, ausgewählt sind.

5. Verfahren gemäß einem der Ansprüche 1 bis 4, **dadurch gekennzeichnet, dass** der Träger Siliciumdioxid (X), Aluminiumoxid (Y) und Aluminiumphosphat (Z) in einem Molprozentverhältnis (X) : (Y): (Z) von (10 bis 95) : (1 bis 80) : (1 bis 85) enthält.

6. Verfahren gemäß einem der Ansprüche 1 bis 5, **dadurch gekennzeichnet, dass** der Träger ein Porenvolumen von wenigstens 1,5 cm$^3$/g aufweist.

7. Verfahren gemäß einem der Ansprüche 1 bis 6, **da-**

**durch gekennzeichnet, dass** das Olefin Ethylen ist.

8. Verfahren gemäß einem der Ansprüche 1 bis 7, **dadurch gekennzeichnet, dass** das Comonomer unter den Olefinen und den Diolefinen mit 4 bis 20 Kohlenstoffatomen ausgewählt ist.